(19) Europäisches Patentamt
European Patent Office
Office européen des brevets

(11) **EP 3 614 268 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(51) Int Cl.:
*G06F 11/08* (2006.01)     *G06F 21/64* (2013.01)

(21) Anmeldenummer: **18189988.1**

(22) Anmeldetag: **21.08.2018**

(54) **VERFAHREN UND VORRICHTUNG ZUM VERARBEITEN VON DATEN MITTELS CODIERTER OPERATIONEN**

METHOD AND DEVICE FOR PROCESSING OF DATA USING CODED OPERATIONS

PROCÉDÉ ET DISPOSITIF DE TRAITEMENT DE DONNÉES À L'AIDE DES OPÉRATIONS CODÉES

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(43) Veröffentlichungstag der Anmeldung:
26.02.2020 Patentblatt 2020/09

(73) Patentinhaber: **Siemens Aktiengesellschaft**
80333 München (DE)

(72) Erfinder: **Walter, Maximilian**
90408 Nürnberg (DE)

(56) Entgegenhaltungen:
EP-A1- 2 631 802

• HOFFMANN MARTIN ET AL: "dOSEK: the design and implementation of a dependability-oriented static embedded kernel", 21ST IEEE REAL-TIME AND EMBEDDED TECHNOLOGY AND APPLICATIONS SYMPOSIUM, IEEE, 13. April 2015 (2015-04-13), Seiten 259-270, XP032777211, DOI: 10.1109/RTAS.2015.7108449 [gefunden am 2015-05-14]
• FORIN P: "Vital coded microprocessor principles and application for various transit systems", CONTROL, COMPUTERS, COMMUNICATIONS IN TRANSPORTATION : SELECTED PAPERS FROM THE IFAC/IFIP/IFORS SYMPOSIUM, PARIS, FRANCE, 19 - 21 SEPTEMBER, PERGAMON, OXFORD, GB, 19. September 1989 (1989-09-19), Seiten 79-84, XP008145769, ISBN: 978-0-08-037025-5

## Beschreibung

Die vorliegende Erfindung betrifft ein Verfahren sowie ein Computerprogrammprodukt zum Verarbeiten von Daten mittels codierter Operationen in einer Anzahl von Zyklen. Des Weiteren betrifft die vorliegende Erfindung eine Vorrichtung zum Verarbeiten von Daten mittels codierter Operationen in einer Anzahl von Zyklen sowie eine funktional sichere, programmierbare Steuerung mit einer solchen Vorrichtung.

Das technische Gebiet der Erfindung betrifft die Verarbeitung von Daten, insbesondere die codierte Verarbeitung von Daten.

Funktional sichere Systeme werden zur Reduktion von Risiken für Gesundheit und Leben sowie zur Vermeidung von Umweltschäden eingesetzt. Neben der sicheren Erfassung und Kommunikation von Prozessinformationen erfordern diese eine sichere Verarbeitung, z.B. in speicherprogrammierbaren Steuerungen oder im Industrie-PC.

Bei der Anwendung funktional sicherer Systeme ist es üblich, die Daten in einer codierten Form zu verarbeiten, um sie vor Fehlern und einer unerkannten Veränderung schützen zu können. Bei einer arithmetischen Codierung wird eine uncodierte Variable x um verschiedene Prüfbits erweitert, welche es ermöglichen, bestimmte auftretende Fehler zu erkennen. Beispielsweise können mit der arithmetischen Codierung unter anderem Fehler im Wertebereich, Operanden- und Operatorenfehler oder nicht aktualisierte Variablen, welche verwendet werden, erkannt werden.

Eine häufig verwendete Form der arithmetischen Codierung ist die ANBD-Codierung. Bei der ANBD-Codierung wird eine uncodierte Variable x mittels einer Eingangskonstanten A, einer variablen-spezifischen Signatur $B_x$ und einer zyklus-spezifischen Signatur D mittels untenstehender Gleichung (1) in eine codierte Variable $x_c$ überführt.

$$x_c = A \cdot x + B_x + D \qquad (1)$$

Mit einer codierten Variable $x_c$ kann unter Verwendung von codierten Operationen, wie beispielsweise CADD, CSUB oder CMOV, gerechnet werden. Die codierten Operationen lassen sich wie folgt auf arithmetische Operationen, wie in diesem Fall, ADD, SUB, MOV(E) zurückführen. Dabei ist K ein Parameter, welcher vorab berechnet werden kann, und $y_c$ stellt eine codierte Variable dar:

$$\text{CADD:} \qquad z_c = (x_c + y_c + K) - D \qquad (2)$$

$$\text{CSUB:} \qquad z_c = (x_c + D + K) - y_c \qquad (3)$$

$$\text{CMOV:} \qquad z_c = x_c + K \qquad (4)$$

Nachteilig an der ANBD-Codierung ist, dass diese Codierungsform, beispielhaft dargestellt anhand der oben gezeigten Vorschriften von CADD, CSUB und CMOV, mit einem hohen Overhead bei der Laufzeit-Performance verbunden ist. Dies bedeutet, dass die ANBD-Codierung bei der Verarbeitung von codierten Daten zu den erforderlichen Nutzdaten, auch zusätzliche Zusatzdaten benötigt, welche beispielsweise zur Übermittlung und Speicherung verwendet werden.

Folgende Übersicht verdeutlicht den hohen Overhead bei der ANBD-Codierung:

| Codierte Ope-ration | Aufwand | | Aufwand | Uncodierte Operation |
|---|---|---|---|---|
| CADD | 2xADD/1xSUB | statt | 1xADD | ADD |
| CSUB | 2xADD/1xSUB | statt | 1xSUB | SUB |
| CMUL | 7xMUL/6xADD/2xSUB | statt | 1xMUL | MUL |
| CMOV | 1xADD | statt | - | MOV |

Das führt dazu, dass aufwändige Hardware, wie beispielsweise leistungsfähige CPUs, zur Verarbeitung der codierten Daten benötigt wird.

Die ANBD-Codierung ist beispielsweise aus der Druckschrift EP 3 104 276 A1 bekannt. Die ANBD-Codierung ist ferner aus der Druckschrift EP 2 631 802 A1 bekannt, welche ein Verfahren zur Speicherung und Propagation von Fehlerinformationen in Computer-Programmen offenbart, bei dem eine global gültige Fehlervariable zur Speicherung und Propagation der Fehlerinformationen verwendet wird, wobei für jeden erkannten Fehler ein von Null verschiedener Wert für den Fehler als Fehlerinformation jeweils mit einem festgelegten Vorzeichen zu der Fehlervariable addiert wird, und wobei der Wert aus einer Abweichung des Inhalts einer codierten Variablen von einem Erwartungswert gebildet wird.

Weiterhin wird von HOFFMANN MARTIN et al in "dOSEK: the design and implementation of a dependability-oriented static embedded kernel", in 21st IEEE real-time and embedded technology and applications symposium, [veröffentlicht am 13. April 2015], Seiten 259-270, ein Aufbau eines Betriebssystems beschrieben, bei welchem auf unzuverlässiger Hardware eine zuverlässige Grundlage für Berechnungen durchgeführt werden kann.Demnach besteht eine Aufgabe der vorliegenden Erfindung darin, die Verarbeitung von Daten mittels codierter Operationen zu verbessern.

Gemäß einem ersten Aspekt wird ein Verfahren zum Verarbeiten von Daten mittels codierter Operationen in einer Anzahl von Zyklen vorgeschlagen. Dabei wird eine uncodierte Variable x mit einer zyklus-spezifischen Signatur D und einer variablen-spezifischen Signatur $B_x$ zu einer codierten Variablen $x_c$ gemäß der Gleichung (5)

$$x_c = D \cdot x + B_x \qquad\qquad (5)$$

codiert.

Die Vorschrift der Gleichung (5) kann auch als DNB-Codierung bezeichnet werden. Da die DNB-Codierung lediglich die B- und die D-Signatur aufweist, vereinfacht sich die Codierung im Vergleich zur ANBD-Codierung, welche die B- und die D-Signatur sowie die Eingangskonstante A aufweist. Die Eingangskonstante A wird vorliegend nicht verwendet.

Durch die oben genannte Vorschrift der DNB-Codierung ergibt sich folgende Ersparnis in Bezug auf den Aufwand gegenüber der ANBD-Codierung:

| Codierte Operation | Aufwand ANBD | Aufwand DNB | Ersparnis absolut | Ersparnis relativ |
|---|---|---|---|---|
| CMOV | 1xADD | 1xADD | 0 | 0% |
| CADD | 2xADD/1xSUB | 2xADD | 1xSUB | 33% |
| CSUB | 2xADD/1xSUB | 1xADD/1xSUB | 1xADD | 33% |
| CMUL | 7xMUL/6xADD /2xSUB | 5xMUL/2xADD /2xSUB | 2xMUL /4xADD | 40% |

Somit weist die DNB-Codierung den technischen Effekt auf, dass sich der Aufwand im Vergleich zu der ANBD-Codierung um bis zu 40% verringern kann.

Damit kann dieselbe Performance wie mit der ANBD-Codierung bei gleichzeitig verringerter notwendiger Rechenleistung erzielt werden. Da Hardware mit verringerter Rechenleistung eingesetzt werden kann, können die Hardwarekosten gesenkt werden.

x ist eine uncodierte Variable x. x wird mithilfe der arithmetischen Codierung über die oben definierte Vorschrift der DNB-Codierung zu $x_c$ codiert.

D ist eine zyklus-spezifische Signatur D. Zyklus-spezifisch bedeutet in diesem Fall, dass die D-Signatur in einem Zyklus für alle Operanden gleich ist, sich jedoch für einen nächsten oder weiteren Zyklus ändern kann. Dabei entspricht ein Zyklus insbesondere einem Schleifendurchlauf. Mit anderen Worten bedeutet dies, dass innerhalb eines Zyklus der Wert von D für alle Operanden gleich ist, sich aber für einen weiteren Zyklus verändern kann.

Die Verwendung der zyklus-spezifischen Signatur D ermöglicht es, zu erkennen, wenn nicht aktualisierte beziehungsweise veraltete Variablen bei der weiteren Verarbeitung von Daten verwendet werden.

$B_x$ ist eine variablen-spezifische Signatur. Variablen-spezifisch bedeutet in diesem Fall, dass für jede Variable, beispielsweise x, y, z, die zugehörige B-Signatur, also $B_x$, $B_y$ oder $B_z$, einen spezifischen Wert aufweist, welcher abhängig von der jeweiligen Variablen ist. $B_x$ ist zusätzlich vorzugsweise statisch, was bedeutet, dass der Wert von $B_x$, oder von $B_y$ oder von $B_z$, für jeden Zyklus gleich ist. Ferner ist der Wert von $B_x$ für zwei Operanden mit hoher Wahrscheinlichkeit unterschiedlich.

Die Verwendung der variablen-spezifischen Signatur $B_x$ ermöglicht es, Operanden- und Operatorenfehler zu erkennen und zu verhindern. Beispiele für Operandenfehler sind eine Vertauschung von Operanden oder eine Verwendung eines falschen Operanden (zum Beispiel das Lesen einer falschen Adresse). Ein Beispiel für einen Operatorenfehler ist eine Ausführung einer falschen Operation (zum Beispiel AND statt ADD).

Gemäß einer Ausführungsform umfassen die codierten Operationen logische codierte Operationen und/oder arithmetische codierte Operationen.

Eine Operation kann über eine Codiervorschrift in eine codierte Operation überführt werden. Bei codierten Operationen kann zumindest zwischen logisch codierten Operationen und arithmetisch codierten Operationen unterschieden werden.

Eine logische Operation ist beispielsweise eine AND-, OR- oder eine NOT-Verknüpfung. Somit ist eine logisch codierte Operation beispielsweise eine CAND-, COR- oder eine CNOT-Verknüpfung, wobei das C bei der CAND-Verknüpfung und den anderen codierten Verknüpfungen angibt, dass es sich um eine codierte AND-Verknüpfung handelt.

Selbiges gilt für die nachfolgenden arithmetischen Operationen.

Eine arithmetische Operation ist beispielsweise eine ADD-, SUB-, MUL- oder MOV-Operation. Somit ist eine arithmetisch codierte Operation beispielsweise CADD, CSUB, CMUL oder CMOV.

Gemäß einer weiteren Ausführungsform umfassen die codierten Operationen eine codierte Additionsoperation CADD, bei welcher eine erste codierte Variable $x_c$ und eine zweite codierte Variable $y_c$ unter Verwendung eines ersten Parameters $K_1$ zu einer dritten codierten Variable $z_c$ gemäß der Gleichung

$$z_c = (x_c + y_c + K_1) \qquad (6)$$

addiert werden, wobei der erste Parameter $K_1$ mittels einer für die erste Variable x spezifischen Signatur $B_x$, einer für die zweite Variable y spezifischen Signatur $B_y$ und einer für die dritte Variable z spezifischen Signatur $B_z$ gemäß der Gleichung

$$K_1 = B_z - B_x - B_y \qquad (7)$$

berechnet wird.

Gemäß einer weiteren Ausführungsform umfassen die codierten Operationen eine codierte Subtraktions-Operation CSUB, bei welcher eine Differenz zwischen einer ersten codierten Variablen $x_c$ und einer zweiten codierten Variablen $y_c$ unter Verwendung eines zweiten Parameters $K_2$ zur Bereitstellung einer dritten codierten Variablen $z_c$ gemäß der Gleichung

$$z_c = (x_c - y_c + K_2) \qquad (8)$$

berechnet wird, wobei der zweite Parameter $K_2$ mittels einer für die erste Variable x spezifischen Signatur $B_x$, einer für die zweite Variable y spezifischen Signatur $B_y$ und einer für die dritte Variable z spezifischen Signatur $B_z$ gemäß der Gleichung

$$K_2 = B_z - B_x + B_y \qquad (9)$$

berechnet wird.

Gemäß einer weiteren Ausführungsform umfassen die codierten Operationen eine codierte Multiplikations-Operation CMUL, bei welcher eine erste codierte Variable $x_c$ und eine zweite codierte Variable $y_c$ unter Verwendung eines dritten Parameters $K_3$, der zyklus-spezifischen Signatur D und eines multiplikativen Inversen INV(D) der zyklus-spezifischen Signatur D zur Bereitstellung einer dritten codierten Variablen $z_c$ gemäß der Gleichung

$$z_c = INV(D) \cdot (x_c \cdot y_c - B_x \cdot y_c - B_y \cdot x_c + B_z \cdot D + K_3) \qquad (10)$$

multipliziert werden, wobei der dritte Parameter $K_3$ mittels einer für die erste Variable x spezifischen Signatur $B_x$ und einer für die dritte Variable z spezifischen Signatur $B_z$ gemäß der Gleichung

$$K_3 = B_y \cdot B_z \qquad (11)$$

berechnet wird.

Gemäß einer weiteren Ausführungsform umfassen die codierten Operationen eine codierte Move-Operation CMOV für eine Zuweisung innerhalb eines bestimmten Zyklus, bei welcher eine codierte Variable $x_c$ einer anderen codierten Variablen $z_c$ unter Verwendung eines vierten Parameters $K_4$ gemäß der Gleichung

$$z_c = x_c + K_4 \qquad (12)$$

zugewiesen wird, wobei der vierte Parameter $K_4$ mittels einer für die Variable x spezifischen Signatur $B_x$ und einer für die andere Variable z spezifischen Signatur $B_z$ gemäß der Gleichung

$$K_4 = B_z - B_x \qquad\qquad (13)$$

berechnet wird.

Gemäß einer weiteren Ausführungsform umfassen die codierten Operationen eine codierte Move-Operation CMOVD für eine Zuweisung von einem ersten Zyklus auf einen zweiten Zyklus, bei welcher eine codierte Variable $x_c$ einer anderen codierten Variablen $z_c$ unter Verwendung eines fünften Parameters $K_5$ und eines sechsten Parameters $K_6$ gemäß der Gleichung

$$z_c = K_5 \cdot x_c + K_6 \qquad\qquad (14)$$

zugewiesen wird, wobei der fünfte Parameter $K_5$ gemäß der Gleichung

$$K_5 = D_2 \cdot \mathrm{INV}(D_1) \qquad\qquad (15)$$

berechnet wird, wobei $D_2$ die für den zweiten Zyklus spezifische Signatur und $\mathrm{INV}(D_1)$ die multiplikative Inverse der für den ersten Zyklus spezifischen Signatur $D_1$ bezeichnen, wobei der sechste Parameter $K_6$ unter Verwendung des fünften Parameters $K_5$, der für die Variable x spezifischen Signatur $B_x$ und der für die andere Variable z spezifischen Signatur $B_z$ gemäß der Gleichung

$$K_6 = B_z - K_5 \cdot B_x \qquad\qquad (16)$$

berechnet wird.

Mithilfe der Gleichungen (14) bis (16) kann die codierte Move-Operation CMOVD gemäß untenstehender Gleichung (17) wie folgt im Detail hergeleitet werden, wobei $(D_1 \cdot \mathrm{INV}(D_1) \text{ modulo } 2^n) = 1$ gilt:

$$
\begin{aligned}
\mathrm{CMOVD}{:}\quad z_c &= D_2 \cdot x + B_z \\
&= D_2 \cdot ((x_c - B_x) \,/\, D_1) + B_z \\
&= D_2 \cdot (1 \cdot (x_c - B_x) \,/\, D_1) + B_z \\
&= D_2 \cdot (D_1 \cdot \mathrm{INV}(D_1) \cdot (x_c - B_x) \,/\, D_1) + B_z \\
&= D_2 \cdot (\mathrm{INV}(D_1) \cdot (x_c - B_x)) + B_z \\
&= D_2 \cdot \mathrm{INV}(D_1) \cdot x_c - D_2 \cdot \mathrm{INV}(D_1) \cdot B_x + B_z \\
&= K_5 \cdot x_c - K_5 \cdot B_x + B_z \\
&= K_5 \cdot x_c + K_6 \qquad\qquad (17)
\end{aligned}
$$

$\mathrm{INV}(D_1)$ bezeichnet das multiplikative Inverse von der für den ersten Zyklus spezifischen Signatur $D_1$ im endlichen Körper $2^n$ oder im Galoiskörper $2^n$, wobei n die Wortbreite der verwendeten arithmetischen Operationen ist. Diese Wortbreite ist vorzugsweise auf 32 oder 64 Bit festgelegt.

Gemäß einer weiteren Ausführungsform werden der fünfte Parameter $K_5$ und der sechste Parameter $K_6$ vorab einer Anwendung der codierten Operationen berechnet und in einer Speichereinheit gespeichert.

Zusätzlich zu den Parametern $K_5$ und $K_6$ können die Parameter $K_1$ bis $K_4$ vorab einer Anwendung der codierten Operationen berechnet und in einer Speichereinheit gespeichert werden.

Gemäß einer weiteren Ausführungsform wird eine Hash-Tabelle als die Speichereinheit verwendet.

Die verschiedenen Werte von $\mathrm{INV}(D_1)$ und $K_1$ bis $K_6$ können vorab berechnet und in einer Hash-Tabelle abgelegt werden, auf die in jedem Zyklus einmal, beispielsweise mittels $D_1$ oder $D_2$ zugegriffen wird.

Die Hash-Tabelle kann beispielsweise auf einem nicht-flüchtigen Speicher, wie zum Beispiel einer Speicherkarte, einem USB-Stick, einer CD-ROM, einer DVD, einer Blue-Ray-Disc oder einem ROM gespeichert werden.

Gemäß einer weiteren Ausführungsform wird die uncodierte Variable x während eines Kompiliervorgangs zu der codierten Variablen $x_c$ codiert.

Gemäß einem zweiten Aspekt wird ein Computerprogrammprodukt vorgeschlagen, welches auf einer programmgesteuerten Einrichtung die Durchführung des wie oben erläuterten Verfahrens gemäß dem zweiten Aspekt veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, Blue-Ray-Disc oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird eine Vorrichtung zum Verarbeiten von Daten mittels codierter Operationen in einer Anzahl von Zyklen vorgeschlagen. Die Vorrichtung umfasst eine Codier-Einheit aufweist, die dazu eingerichtet ist, eine uncodierte Variable x mit einer zyklus-spezifischen Signatur D und einer variablen-spezifischen Signatur $B_x$ zu einer codierten Variablen $x_c$ gemäß der Gleichung

$$x_c = D \cdot x + B_x \qquad\qquad (5)$$

zu codieren.

Die jeweilige Einheit, zum Beispiel die Codier-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das vorgeschlagene Verfahren beschriebenen Ausführungsformen und Merkmale gelten für die vorgeschlagene Vorrichtung entsprechend.

Gemäß einem vierten Aspekt wird eine funktional sichere, programmierbare Steuerung mit einer Vorrichtung gemäß dem dritten Aspekt vorgeschlagen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

FIG 1    zeigt ein schematisches Diagramm eines Ausführungsbeispiels eines Verfahrens zum Verarbeiten von Daten mittels codierter Operationen;

FIG 2    zeigt ein schematisches Blockdiagramm eines Ausführungsbeispiels einer Vorrichtung zum Verarbeiten von Daten mittels codierter Operationen; und

FIG 3    zeigt ein schematisches Blockdiagramm eines Ausführungsbeispiels einer funktional sicheren, programmierbaren Steuerung mit der Vorrichtung nach FIG 2.

In den Figuren sind gleiche oder funktionsgleiche Elemente mit denselben Bezugszeichen versehen worden, sofern nichts anderes angegeben ist.

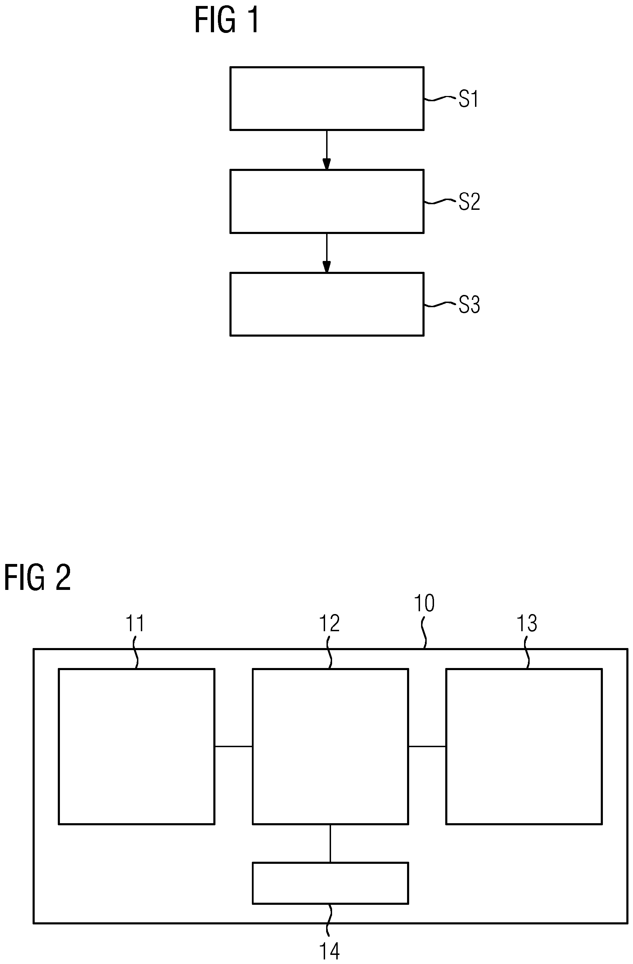

FIG 1 zeigt ein schematisches Diagramm eines Ausführungsbeispiels eines Verfahrens zum Verarbeiten von Daten mittels codierter Operationen in einer Anzahl von Zyklen.

Das Ausführungsbeispiel der FIG 1 umfasst die folgenden Verfahrensschritte S1, S2 und S3:

In dem Schritt S1 wird eine uncodierte Variable x zu einer codierten Variablen $x_c$ codiert. Bei dem vorliegenden Ausführungsbeispiel werden beispielhaft die drei Variablen x, y und z verwendet.

Im Detail wird in Schritt S1 die jeweilige uncodierte Variable x, y und z mit einer zyklisch-spezifischen Signatur D und einer jeweiligen variablen-spezifischen Signatur $B_x$, $B_y$ und $B_z$ zu einer codierten Variablen $x_c$, $y_c$ und $z_c$ gemäß untenstehender Gleichungen codiert.

$$x_c = D \cdot x + B_x \qquad\qquad (5)$$
$$y_c = D \cdot y + B_y$$
$$z_c = D \cdot z + B_z$$

Das Codieren der jeweiligen uncodierten Variablen x, y und z wird vorzugsweise während eines Kompiliervorgangs zu der jeweiligen codierten Variablen $x_c$, $y_c$ und $z_c$ durchgeführt.

In dem Schritt S2 wird zumindest eine codierte Operation auf zumindest eine der codierten Variablen $x_c$, $y_c$ und $z_c$ angewendet.

Die codierten Operationen umfassen insbesondere logische codierte Operationen und/oder arithmetische codierte Operationen.

Die codierten Operationen umfassen dabei insbesondere eine codierte Additionsoperation CADD, eine codierte Subtraktionsoperation CSUB, eine codierte Multiplikationsoperation CMUL, eine codierte Move-Operation CMOV für eine Zuweisung innerhalb eines bestimmten Zyklus sowie eine codierte Move-Operation CMOVD für eine Zuweisung von einem ersten Zyklus auf einen zweiten Zyklus.

Die genannten codierten Operationen können vorzugsweise wie folgt ausgeführt sein.

Bei der codierten Additionsoperation CADD werden eine erste codierte Variable $x_c$ und eine zweite codierte Variable $y_c$ unter Verwendung eines ersten Parameters $K_1$ zu einer dritten codierten Variable $z_c$ gemäß der Gleichung

$$z_c = (x_c + y_c + K_1) \qquad\qquad (6)$$

addiert, wobei der erste Parameter $K_1$ mittels einer für die erste Variable x spezifischen Signatur $B_x$, einer für die zweite Variable y spezifischen Signatur $B_y$ und einer für die dritte Variable z spezifischen Signatur $B_z$ gemäß der Gleichung

$$K_1 = B_z - B_x - B_y \qquad\qquad (7)$$

berechnet wird.

Weiter wird bei der codierten Subtraktions-Operation CSUB eine Differenz zwischen einer ersten codierten Variablen $x_c$ und einer zweiten codierten Variablen $y_c$ unter Verwendung eines zweiten Parameters $K_2$ zur Bereitstellung einer dritten codierten Variablen $z_c$ gemäß der Gleichung

$$z_c = (x_c - y_c + K_2) \qquad\qquad (8)$$

berechnet, wobei der zweite Parameter $K_2$ mittels einer für die erste Variable x spezifischen Signatur $B_x$, einer für die zweite Variable y spezifischen Signatur $B_y$ und einer für die dritte Variable z spezifischen Signatur $B_z$ gemäß der Gleichung

$$K_2 = B_z - B_x + B_y \qquad\qquad (9)$$

berechnet wird.

Bei der codierten Multiplikations-Operation CMUL wird eine erste codierte Variable $x_c$ und eine zweite codierte Variable $y_c$ unter Verwendung eines dritten Parameters $K_3$, der zyklus-spezifischen Signatur D und eines multiplikativen Inversen INV(D) der zyklus-spezifischen Signatur D zur Bereitstellung einer dritten codierten Variablen $z_c$ gemäß der Gleichung

$$z_c = INV(D) \cdot (x_c \cdot y_c - B_x \cdot y_c - B_y \cdot x_c + B_z \cdot D + K_3) \qquad (10)$$

multipliziert, wobei der dritte Parameter $K_3$ mittels einer für die erste Variable x spezifischen Signatur $B_x$ und einer für die dritte Variable z spezifischen Signatur $B_z$ gemäß der Gleichung

$$K_3 = B_y \cdot B_z \qquad\qquad (11)$$

berechnet wird.

Nachfolgend wird bei der codierten Move-Operation CMOV, welche für eine Zuweisung innerhalb eines bestimmten Zyklus bereitgestellt wird, eine codierte Variable $x_c$ einer anderen codierten Variablen $z_c$ unter Verwendung eines vierten Parameters $K_4$ gemäß der Gleichung

$$z_C = x_C + K_4 \qquad\qquad (12)$$

zugewiesen, wobei der vierte Parameter $K_4$ mittels einer für die Variable x spezifischen Signatur $B_x$ und einer für die andere Variable z spezifischen Signatur $B_z$ gemäß der Gleichung

$$K_4 = B_z - B_x \qquad\qquad (13)$$

berechnet wird.

Bei der codierten Move-Operation CMOVD wird, welche für eine Zuweisung von einem ersten Zyklus auf einen zweiten Zyklus bereitgestellt wird, eine codierte Variable $x_c$ einer anderen codierten Variablen $z_c$ unter Verwendung eines fünften Parameters $K_5$ und eines sechsten Parameters $K_6$ gemäß der Gleichung

$$z_C = K_5 \cdot x_C + K_6 \qquad\qquad (14)$$

zugewiesen, wobei der fünfte Parameter $K_5$ gemäß der Gleichung

$$K_5 = D_2 \cdot INV(D_1) \qquad\qquad (15)$$

berechnet wird, wobei $D_2$ die für den zweiten Zyklus spezifische Signatur und $INV(D_1)$ die multiplikative Inverse der für den ersten Zyklus spezifischen Signatur $D_1$ bezeichnen, wobei der sechste Parameter $K_6$ unter Verwendung des fünften Parameters $K_5$, der für die Variable x spezifischen Signatur $B_x$ und der für die andere Variable z spezifischen Signatur $B_z$ gemäß der Gleichung

$$K_6 = B_z - K_5 \cdot B_x \qquad\qquad (16)$$

berechnet wird.

Besagter fünfter Parameter $K_5$ und besagter sechster Parameter $K_6$ können vorzugsweise vorab einer Anwendung der codierten Operationen gemäß dem Schritt S2 berechnet werden und in einer Speichereinheit 14 (siehe FIG 2) gespeichert werden.

In Schritt S3 können die codierten Variablen $x_c$, $y_c$, $z_c$ und/oder Ergebnisse der codierten Operationen decodiert oder dekompiliert werden.

FIG 2 zeigt ein schematisches Blockdiagramm eines Ausführungsbeispiels einer Vorrichtung 10 zum Verarbeiten von Daten mittels codierter Operationen in einer Anzahl von Zyklen. Die Vorrichtung 10 umfasst eine Codier-Einheit 11, eine Verarbeitungs-Einheit 12 sowie eine Decodier-Einheit 13.

Die Codier-Einheit 11 ist dazu eingerichtet, eine uncodierte Variable x mit einer zyklus-spezifischen Signatur D und einer variablen-spezifischen Signatur $B_x$ einer codierten Variablen $x_c$ gemäß der Gleichung

$$x_C = D \cdot x + B_x \qquad\qquad (5)$$

zu codieren.

Insbesondere ist die Codier-Einheit 11 dazu eingerichtet, den Verfahrensschritt S1 gemäß FIG 1 auszuführen und insbesondere auch weitere uncodierte Variablen oder Operanden zu codieren.

Die Verarbeitungs-Einheit 12 ist dazu eingerichtet, codierte Operationen, wie beispielsweise die vorgenannten CADD, CSUB und dergleichen, auf die codierten Variablen $x_c$, $y_c$ und $z_c$ anzuwenden.

Insbesondere kann bei der Anwendung der codierten Move-Operation CMOVD die Verarbeitungs-Einheit 12 auf die vorgenannte Speicher-Einheit 14 zugreifen, welche insbesondere besagten fünften Parameter $K_5$ und den sechsten Parameter $K_6$ speichert. Des Weiteren kann die Speicher-Einheit 14 auch weitere Parameter oder Werte, die vorab berechnet wurden, speichern. Die Speicher-Einheit 14 ist insbesondere als eine Hash-Tabelle ausgebildet.

Die Decodier-Einheit 13 ist dazu eingerichtet, codiert vorliegende Variablen oder Operanden zu einer weiteren Verarbeitung wiederum zu decodieren bzw. zu dekompilieren.

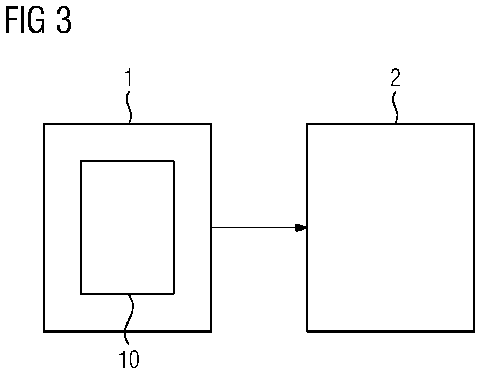

FIG 3 zeigt ein schematisches Blockdiagramm eines Ausführungsbeispiels einer funktional sicheren, programmierbaren Steuerung 1.

Die Steuerung 1 ist dazu eingerichtet, eine Maschine 2, zum Beispiel ein Förderband oder einen Roboterarm, anzusteuern. Hierzu weist die Steuerung 1 der FIG 3 eine wie zur FIG 2 beschriebene Vorrichtung 10 zum Verarbeiten von Daten mittels codierter Operationen auf.

Obwohl die vorliegende Erfindung anhand von Ausführungsbeispielen beschrieben wurde, ist sie vielfältig modifizierbar.

**Patentansprüche**

1. Verfahren zum Verarbeiten von Daten mittels codierter Operationen in einer Anzahl von Zyklen, bei welchem eine uncodierte Variable x mit einer zyklus-spezifischen Signatur D und einer variablen-spezifischen Signatur $B_x$ zu einer codierten Variablen $x_c$ gemäß der Gleichung

$$x_c = D \cdot x + B_x$$

codiert wird (S1) und zumindest eine codierte Operation auf die codierte Variable $x_c$ angewendet wird (S2).

2. Verfahren nach Anspruch 1,
   **dadurch gekennzeichnet,**
   **dass** die zumindest eine codierte Operationen logische codierte Operationen und/oder arithmetische codierte Operationen umfasst.

3. Verfahren nach Anspruch 1 oder 2,
   **dadurch gekennzeichnet,**
   **dass** die zumindest eine codierte Operation eine codierte Additionsoperation CADD umfassen, bei welcher die erste codierte Variable $x_c$ und eine zweite codierte Variable $y_c$ unter Verwendung eines ersten Parameters $K_1$ zu einer dritten codierten Variable $z_c$ gemäß der Gleichung

$$z_c = (x_c + y_c + K_1)$$

   addiert werden, wobei der erste Parameter $K_1$ mittels einer für die erste Variable x spezifischen Signatur $B_x$, einer für die zweite Variable y spezifischen Signatur $B_y$ und einer für die dritte Variable z spezifischen Signatur $B_z$ gemäß der Gleichung

$$K_1 = B_z - B_x - B_y$$

   berechnet wird (S2).

4. Verfahren nach einem der Ansprüche 1 bis 3,
   **dadurch gekennzeichnet,**
   **dass** die zumindest eine codierte Operation eine codierte Subtraktions-Operation CSUB umfassen, bei welcher eine Differenz zwischen der ersten codierten Variablen $x_c$ und einer zweiten codierten Variablen $y_c$ unter Verwendung eines zweiten Parameters $K_2$ zur Bereitstellung einer dritten codierten Variablen $z_c$ gemäß der Gleichung

$$z_c = (x_c - y_c + K_2)$$

   berechnet wird, wobei der zweite Parameter $K_2$ mittels einer für die erste Variable x spezifischen Signatur $B_x$, einer für die zweite Variable y spezifischen Signatur $B_y$ und einer für die dritte Variable z spezifischen Signatur $B_z$ gemäß der Gleichung

$$K_2 = B_z - B_x + B_y$$

berechnet wird (S2).

5. Verfahren nach einem der Ansprüche 1 bis 4,
**dadurch gekennzeichnet,**
**dass** die zumindest eine codierte Operation eine codierte Multiplikations-Operation CMUL umfassen, bei welcher die erste codierte Variable $x_c$ und eine zweite codierte Variable $y_c$ unter Verwendung eines dritten Parameters $K_3$, der zyklus-spezifischen Signatur D und eines multiplikativen Inversen INV(D) der zyklus-spezifischen Signatur D zur Bereitstellung einer dritten codierten Variablen $z_c$ gemäß der Gleichung

$$z_c = INV(D) \cdot (x_c \cdot y_c - B_x \cdot y_c - B_y \cdot x_c + B_z \cdot D + K_3)$$

multipliziert werden, wobei der dritte Parameter $K_3$ mittels einer für die erste Variable x spezifischen Signatur $B_x$ und einer für die dritte Variable z spezifischen Signatur $B_z$ gemäß der Gleichung

$$K_3 = B_y \cdot B_z$$

berechnet wird (S2).

6. Verfahren nach einem der Ansprüche 1 bis 5,
**dadurch gekennzeichnet,**
**dass** die zumindest eine codierte Operation eine codierte Move-Operation CMOV für eine Zuweisung innerhalb eines bestimmten Zyklus umfassen, bei welcher die codierte Variable $x_c$ einer anderen codierten Variablen $z_c$ unter Verwendung eines vierten Parameters $K_4$ gemäß der Gleichung

$$z_c = x_c + K_4$$

zugewiesen wird, wobei der vierte Parameter $K_4$ mittels einer für die Variable x spezifischen Signatur $B_x$ und einer für die andere Variable z spezifischen Signatur $B_z$ gemäß der Gleichung

$$K_4 = B_z - B_x$$

berechnet wird (S2).

7. Verfahren nach einem der Ansprüche 1 bis 6,
**dadurch gekennzeichnet,**
**dass** die zumindest eine codierte Operation eine codierte Move-Operation CMOVD für eine Zuweisung von einem ersten Zyklus auf einen zweiten Zyklus umfassen, bei welcher die codierte Variable $x_c$ einer anderen codierten Variablen $z_c$ unter Verwendung eines fünften Parameters $K_5$ und eines sechsten Parameters $K_6$ gemäß der Gleichung

$$z_c = K_5 \cdot x_c + K_6$$

zugewiesen wird, wobei der fünfte Parameter $K_5$ gemäß der Gleichung

$$K_5 = D_2 \cdot INV(D_1)$$

berechnet wird, wobei $D_2$ die für den zweiten Zyklus spezifische Signatur und INV($D_1$) die multiplikative Inverse der für den ersten Zyklus spezifischen Signatur $D_1$ bezeichnen, wobei der sechste Parameter $K_6$ unter Verwendung des fünften Parameters $K_5$, der für die Variable x spezifischen Signatur $B_x$ und der für die andere Variable z spezifischen Signatur $B_z$ gemäß der Gleichung

$$K_6 = B_z - K_5 \cdot B_x$$

berechnet wird (S2).

8. Verfahren nach Anspruch 7,
   **dadurch gekennzeichnet,**
   **dass** der fünfte Parameter $K_5$ und der sechste Parameter $K_6$ vorab einer Anwendung der codierten Operationen berechnet werden und in einer Speichereinheit (14) gespeichert werden.

9. Verfahren nach Anspruch 8,
   **dadurch gekennzeichnet,**
   **dass** eine Hash-Tabelle als die Speichereinheit (14) verwendet wird.

10. Verfahren nach einem der Ansprüche 1 bis 9,
    **dadurch gekennzeichnet,**
    **dass** die uncodierte Variable x während eines Kompiliervorgangs zu der codierten Variablen $x_c$ codiert wird.

11. Computerprogrammprodukt, welches auf einer programmgesteuerten Einrichtung die Durchführung des Verfahrens nach einem der Ansprüche 1 bis 10 veranlasst.

12. Vorrichtung (10) zum Verarbeiten von Daten mittels codierter Operationen in einer Anzahl von Zyklen, welche eine Codier-Einheit (11) aufweist, die dazu eingerichtet ist, eine uncodierte Variable x mit einer zyklus-spezifischen Signatur D und einer variablen-spezifischen Signatur $B_x$ zu einer codierten Variablen $x_c$ gemäß der Gleichung

$$x_c = D \cdot x + B_x$$

    zu codieren und zumindest eine codierte Operation auf die codierte Variable $x_c$ anzuwenden.

13. Funktional sichere, programmierbare Steuerung (1) mit einer Vorrichtung (10) nach Anspruch 12.

**Claims**

1. Method for processing data by way of coded operations in a number of cycles, in which an uncoded variable x is coded with a cycle-specific signature D and a variable-specific signature $B_x$ to form a coded variable $x_c$ using the equation

$$x_c = D \cdot x + B_x$$

   (S1) and at least one coded operation is applied to the coded variable $x_c$ (S2).

2. Method according to Claim 1,
   **characterized**
   **in that** the at least one coded operation comprises logic coded operations and/or arithmetic coded operations.

3. Method according to Claim 1 or 2,
   **characterized**
   **in that** the at least one coded operation comprises a coded addition operation CADD, in which the first coded variable $x_c$ and a second coded variable $y_c$ are added using a first parameter $K_1$ to form a third coded variable $z_c$ using the equation

$$z_c = (x_c + y_c + K_1),$$

wherein the first parameter $K_1$ is calculated by way of a signature $B_x$ specific to the first variable x, a signature $B_y$ specific to the second variable y and a signature $B_z$ specific to the third variable z using the equation

$$K_1 = B_z - B_x - B_y$$

(S2).

4.  Method according to one of Claims 1 to 3,
    **characterized**
    **in that** the at least one coded operation comprises a coded subtraction operation CSUB, in which a difference between the first coded variable $x_c$ and a second coded variable $y_c$ is calculated using a second parameter $K_2$ to provide a third coded variable $z_c$ using the equation

$$z_c = (x_c - y_c + K_2),$$

wherein the second parameter $K_2$ is calculated by way of a signature $B_x$ specific to the first variable x, a signature $B_y$ specific to the second variable y and a signature $B_z$ specific to the third variable z using the equation

$$K_2 = B_z - B_x + B_y$$

(S2).

5.  Method according to one of Claims 1 to 4,
    **characterized**
    **in that** the at least one coded operation comprises a coded multiplication operation CMUL, in which the first coded variable $x_c$ and a second coded variable $y_c$ are multiplied using a third parameter $K_3$, the cycle-specific signature D and a multiplicative inverse INV(D) of the cycle-specific signature D to provide a third coded variable $z_c$ using the equation

$$z_c = INV(D) \cdot (x_c \cdot y_c - B_x \cdot y_c - B_y \cdot x_c + B_z \cdot D + K_3),$$

wherein the third parameter $K_3$ is calculated by way of a signature $B_x$ specific to the first variable x and a signature $B_z$ specific to the third variable z using the equation

$$K_3 = B_y \cdot B_z$$

(S2).

6.  Method according to one of Claims 1 to 5,
    **characterized**
    **in that** the at least one coded operation comprises a coded move operation CMOV for an assignment within a particular cycle, in which the coded variable $x_c$ is assigned to another coded variable $z_c$ using a fourth parameter $K_4$ using the equation

$$z_c = x_c + K_4,$$

wherein the fourth parameter $K_4$ is calculated by way of a signature $B_x$ specific to the variable x and a signature $B_z$ specific to the other variable z using the equation

$$K_4 = B_z - B_x$$

(S2) .

7. Method according to one of Claims 1 to 6,
**characterized**
**in that** the at least one coded operation comprises a coded move operation CMOVD for an assignment of a first cycle to a second cycle, in which the coded variable $x_c$ is assigned to another coded variable $z_c$ using a fifth parameter $K_5$ and a sixth parameter $K_6$ using the equation

$$z_c = K_5 \cdot x_c + K_6,$$

wherein the fifth parameter $K_5$ is calculated using the equation

$$K_5 = D_2 \cdot INV(D_1),$$

wherein $D_2$ denotes the signature specific to the second cycle and $INV(D_1)$ denotes the multiplicative inverse of the signature $D_1$ specific to the first cycle, wherein the sixth parameter $K_6$ is calculated using the fifth parameter $K_5$, the signature $B_x$ specific to the variable x and the signature $B_z$ specific to the other variable z using the equation

$$K_6 = B_z - K_5 \cdot B_x$$

(S2) .

8. Method according to Claim 7,
**characterized**
**in that** the fifth parameter $K_5$ and the sixth parameter $K_6$ are calculated before application of the coded operations and are stored in a storage unit (14).

9. Method according to Claim 8,
**characterized**
**in that** a hash table is used as the storage unit (14).

10. Method according to one of Claims 1 to 9,
**characterized**
**in that** the uncoded variable x is coded during a compilation procedure to form the coded variable $x_c$.

11. Computer program product that prompts the performance of the method according to one of Claims 1 to 10 on a program-controlled apparatus.

12. Device (10) for processing data by way of coded operations in a number of cycles, which device has a coding unit (11) that is configured so as to code an uncoded variable x with a cycle-specific signature D and a variable-specific signature $B_x$ to form a coded variable $x_c$ using the equation

$$x_c = D \cdot x + B_x.$$

and to apply at least one coded operation to the coded variable $x_c$.

13. Functionally secure programmable controller (1) having a device (10) according to Claim 12.

**Revendications**

1. Procédé de traitement de données à l'aide d'opérations codées dans un nombre de cycles, dans lequel une variable non codée x est codée (S1) avec une signature D spécifique au cycle et une signature $B_x$ spécifique à la variable pour obtenir une variable codée $x_c$ selon l'équation

$$x_c = D \cdot x + B_x$$

et au moins une opération codée est appliquée (S2) à la variable codée $x_c$.

2. Procédé selon la revendication 1, **caractérisé en ce que** l'au moins une opération codée comprend des opérations codées logiques et/ou des opérations codées arithmétiques.

3. Procédé selon la revendication 1 ou 2, **caractérisé en ce que** l'au moins une opération codée comprend une opération d'addition codée CADD dans laquelle la première variable codée $x_c$ et une deuxième variable codée $y_c$ sont additionnées en utilisant un premier paramètre $K_1$ pour obtenir une troisième variable codée $z_c$ selon l'équation

$$z_c = (x_c + y_c + K_1)$$

le premier paramètre K1 étant calculé (S2) au moyen d'une signature $B_x$ spécifique pour la première variable x, d'une signature $B_y$ spécifique pour la deuxième variable y et d'une signature $B_z$ spécifique pour la troisième variable z selon l'équation

$$K_1 = B_z - B_x - B_y.$$

4. Procédé selon l'une des revendications 1 à 3, **caractérisé en ce que** l'au moins une opération codée comprend une opération de soustraction codée CSUB dans laquelle une différence entre la première variable codée $x_c$ et une deuxième variable codée $y_c$ est calculée en utilisant un deuxième paramètre $K_2$ pour donner une troisième variable codée $z_c$ selon l'équation

$$z_c = (x_c - y_c + K_2),$$

le deuxième paramètre $K_2$ étant calculé (S2) au moyen d'une signature $B_x$ spécifique pour la première variable x, d'une signature $B_y$ spécifique pour la deuxième variable y et d'une signature $B_z$ spécifique pour la troisième variable z selon l'équation

$$K_2 = B_z - B_x + B_y.$$

5. Procédé selon l'une des revendications 1 à 4, **caractérisé en ce que** l'au moins une opération codée comprend une opération de multiplication codée CMUL dans laquelle la première variable codée $x_c$ et une deuxième variable codée $y_c$ sont multipliées en utilisant un troisième paramètre $K_3$, la signature D spécifique au cycle et une inverse multiplicative INV(D) de la signature D spécifique au cycle pour donner une troisième variable codée $z_c$ selon l'équation

$$z_c = INV(D) \cdot (x_c \cdot y_c - B_x \cdot y_c - B_y \cdot x_c + B_2 \cdot D + K_3),$$

le troisième paramètre $K_3$ étant calculé (S2) au moyen d'une signature $B_x$ spécifique pour la première variable x et d'une signature $B_z$ spécifique pour la troisième variable z selon l'équation

$$K_3 = B_y \cdot B_z.$$

6. Procédé selon l'une des revendications 1 à 5, **caractérisé en ce que** l'au moins une opération codée est une opération de déplacement codée CMOV pour une affectation dans un cycle déterminé, dans laquelle la variable codée $x_c$ est affectée à une autre variable codée $z_c$ en utilisant un quatrième paramètre $K_4$ selon l'équation

$$z_c = x_c + K_4,$$

le quatrième paramètre $K_4$ étant calculé (S2) au moyen d'une signature $B_x$ spécifique pour la variable x et d'une signature $B_z$ spécifique pour l'autre variable z selon l'équation

$$K_4 = B_z - B_x.$$

7. Procédé selon l'une des revendications 1 à 6, **caractérisé en ce que** l'au moins une opération codée est une opération de déplacement codée CMOVD pour une affectation d'un premier cycle à un deuxième cycle, dans laquelle la variable codée $x_c$ est affectée à une autre variable codée $z_c$ en utilisant un cinquième paramètre $K_5$ et un sixième paramètre $K_6$ selon l'équation

$$z_c = K_5 \cdot x_c + K_6,$$

le cinquième paramètre $K_5$ étant calculé selon l'équation

$$K_5 = D_2 \cdot INV(D_1),$$

$D_2$ désignant la signature spécifique pour le deuxième cycle et $INV(D_1)$, l'inverse multiplicative de la signature $D_1$ spécifique pour le premier cycle, le sixième paramètre $K_6$ étant calculé (S2) en utilisant le cinquième paramètre $K_5$, la signature $B_x$ spécifique pour la variable x et la signature $B_z$ spécifique pour l'autre variable z selon l'équation

$$K_6 = B_z - K_5 \cdot B_x.$$

8. Procédé selon la revendication 7, **caractérisé en ce que** le cinquième paramètre $K_5$ et le sixième paramètre $K_6$ sont calculés avant une application des opérations codées et sauvegardés dans une unité de mémoire (14).

9. Procédé selon la revendication 8, **caractérisé en ce qu'**une table de hachage est utilisée en tant qu'unité de mémoire (14).

10. Procédé selon l'une des revendications 1 à 9, **caractérisé en ce que** la variable non codée x est codée pendant une opération de compilation pour donner la variable codée $x_c$.

11. Produit de programme informatique qui fait exécuter le procédé selon l'une des revendications 1 à 10 sur un dispositif commandé par programme.

12. Dispositif (10) pour traiter des données au moyen d'opérations codées dans un nombre de cycles, lequel comporte une unité de codage (11) qui est configurée pour coder une variable non codée x avec une signature D spécifique au cycle et une signature $B_x$ spécifique à la variable pour obtenir une variable codée $x_c$ selon l'équation

$$x_c = D \cdot x + B_x$$

et pour appliquer au moins une opération codée à la variable $x_c$.

13. Commande programmable fonctionnellement sûre (1) comportant un dispositif (10) selon la revendication 12.

## FIG 1

```
┌─────────────────────┐
│                     │──── S1
└─────────────────────┘
           │
           ▼
┌─────────────────────┐
│                     │──── S2
└─────────────────────┘
           │
           ▼
┌─────────────────────┐
│                     │──── S3
└─────────────────────┘
```

## FIG 2

```
                           10
      11          12                  13
   ┌──────────────────────────────────────────┐
   │ ┌────────┐  ┌────────┐     ┌────────┐     │
   │ │        │  │        │     │        │     │
   │ │        │──│        │─────│        │     │
   │ │        │  │        │     │        │     │
   │ └────────┘  └────────┘     └────────┘     │
   │               ┌──────┐                    │
   │               │      │                    │
   │               └──────┘                    │
   └──────────────────────────────────────────┘
                     14
```

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3104276 A1

- EP 2631802 A1

**In der Beschreibung aufgeführte Nicht-Patentliteratur**

- **HOFFMANN MARTIN et al.** dOSEK: the design and implementation of a dependability-oriented static embedded kernel. *21st IEEE real-time and embedded technology and applications symposium,* 13. April 2015